(19) **Europäisches Patentamt / European Patent Office / Office européen des brevets**

(11) **EP 3 636 706 A1**

(12) # EUROPEAN PATENT APPLICATION
published in accordance with Art. 153(4) EPC

(43) Date of publication:
**15.04.2020 Bulletin 2020/16**

(21) Application number: **18814366.3**

(22) Date of filing: **28.05.2018**

(51) Int Cl.:
*C08L 7/00* (2006.01)   *C08K 5/053* (2006.01)
*C08L 9/00* (2006.01)   *C08L 17/00* (2006.01)
*B60C 1/00* (2006.01)

(86) International application number:
**PCT/JP2018/020394**

(87) International publication number:
**WO 2018/225564 (13.12.2018 Gazette 2018/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.06.2017   JP 2017114411**

(71) Applicant: **Bridgestone Corporation**
**Tokyo 104-8340 (JP)**

(72) Inventors:
• **SHODA, Yasuhiro**
**Tokyo 104-8340 (JP)**
• **TSUNODA, Katsuhiko**
**Tokyo 104-8340 (JP)**

(74) Representative: **Oxley, Robin John George**
**Marks & Clerk LLP**
**15 Fetter Lane**
**London EC4A 1BW (GB)**

(54) **RUBBER COMPOSITION, RUBBER PRODUCT, AND TIRE**

(57)   An object of the present invention is to provide a rubber composition from which a crosslinked rubber composition having excellent crack resistance and high breaking elongation and breaking stress can be obtained. Further, another object thereof is to provide a rubber product and a tire using the rubber composition.

A rubber composition of the present invention comprises a rubber component (A) comprising 30% by mass or more of a natural rubber and a synthetic isoprene rubber in total, at least one (B) selected from the group consisting of a reclaimed rubber and a powdered rubber, and a polyhydric alcohol (C) having 3 or more hydroxyl groups per molecule.

**EP 3 636 706 A1**

**Description**

Technical Field

The present invention relates to a rubber composition, a rubber product, and a tire.

Background Art

Recently, from the viewpoint of reducing environmental load, application of reclaimed materials that are recycled from waste rubber products (reclaimed rubber, reclaimed powdered rubber, etc.) to tires is desired. However, mere incorporation of reclaimed materials has a problem of reduction in crack resistance.

Patent Literature 1 discloses a rubber composition comprising, with respect to 100 parts by mass of a diene rubber component, 1 to 10 parts by mass of a reclaimed rubber and 30 to 150 parts by mass of a filler comprising 20 parts by mass or more of carbon black, in which the carbon black has a specific CTAB adsorption specific surface area and 24M4DBP oil absorption and the reclaimed rubber has a specific Mooney viscosity and a natural rubber regeneration rate, for the purpose of providing a rubber composition for a cap tread in which a reduction in breaking strength and a deterioration in edge breakage resistance are reduced as much as possible and the anti-shrink property is improved while a reclaimed rubber is mixed.

Further, Patent Literature 2 discloses a rubber composition for an undertread comprising 10 to 30 parts by mass of a reclaimed rubber and 1 to 24 parts by mass of calcium carbonate per 100 parts by mass of a specific diene rubber, for the purpose of providing a rubber composition for an undertread in which the breaking strength of the rubber composition can be maintained at a practical level while a reclaimed rubber and calcium carbonate are mixed as extenders for rubber raw materials.

Citation List

Patent Literature

PTL1: JP 2009-298910 A
PTL2: JP 2010-65137 A

Summary of Invention

Technical Problem

An object of the present invention is to provide a rubber composition in which at least one selected from the group consisting of a reclaimed rubber and a powdered rubber is mixed, and the ratio of reclaimed materials to the total mass of the rubber composition is high, and from which a crosslinked rubber composition having excellent crack resistance and high breaking elongation and breaking stress can be obtained. Further, another object of the present invention is to provide a rubber product and a tire using the rubber composition.

Solution to Problem

As a result of diligent studies, the present inventors have found that mixing a specific polyhydric alcohol into a rubber composition comprising a rubber component and at least one selected from the group consisting of a reclaimed rubber and a powdered rubber can solve the above-mentioned problems.

Specifically, the present invention relates to the following <1> to <9>.

<1> A rubber composition comprising a rubber component (A) comprising 30% by mass or more of a natural rubber and a synthetic isoprene rubber in total, at least one (B) selected from the group consisting of a reclaimed rubber and a powdered rubber, and a polyhydric alcohol (C) having 3 or more hydroxyl groups per molecule.

<2> The rubber composition according to <1>, wherein the polyhydric alcohol (C) is a linear polyhydric alcohol in which a linear aliphatic hydrocarbon is substituted with 3 or more hydroxyl groups.

<3> The rubber composition according to <1> or <2>, wherein the number of hydroxyl groups that the polyhydric alcohol (C) has per molecule is more than a half of the number of carbon atoms per molecule.

<4> The rubber composition according to any one of <1> to <3>, wherein the polyhydric alcohol (C) has a melting point of 170°C or less.

<5> The rubber composition according to any one of <1> to <4>, wherein a content of the polyhydric alcohol (C) is 1 to 6 parts by mass per 100 parts by mass of the rubber component (A).

<6> The rubber composition according to any one of <1> to <5>, wherein a content of the at least one (B) selected from the group consisting of a reclaimed rubber and a powdered rubber is 10 parts by mass or more per 100 parts by mass of the rubber component (A).

<7> The rubber composition according to any one of <1> to <6>, wherein a total content of the natural rubber and the synthetic isoprene rubber in the rubber component (A) is 50% by mass or more.

<8> A rubber product using the rubber composition of any one of <1> to <7>.

<9> A tire using the rubber composition of any one of <1> to <7>.

Advantageous Effects of Invention

According to the present invention, it is possible to provide a rubber composition from which a crosslinked rubber composition having excellent crack resistance, and high breaking elongation and breaking stress can be obtained even if at least one selected from the group consisting of a reclaimed rubber and a powdered rubber is mixed therein. Further, according to the present invention, it is possible to provide a rubber product and a tire using the rubber composition.

Description of Embodiments

The present invention is illustrated and described in detail based on embodiments thereof hereinunder. In the following description, the wording "A to B" indicating the numerical range represents a numerical range including the end points A and B, that is "A or more and B or less" (when A < B) or "A or less and B or more" (when A > B).

Part by mass and % by mass have the same meaning as part by weight and % by weight, respectively.

[Rubber Composition]

A rubber composition of the present invention comprises a rubber component (A) comprising 30% by mass or more of a natural rubber and a synthetic isoprene rubber in total (hereinafter, also referred to as "component A"), at least one (B) selected from the group consisting of a reclaimed rubber and a powdered rubber (hereinafter, also referred to as "component B"), and a polyhydric alcohol (C) having 3 or more hydroxyl groups per molecule (hereinafter, also referred to as "component C").

A conventional crosslinked rubber composition obtained by crosslinking a rubber composition comprising a reclaimed rubber and/or a powdered rubber has a problem that it is greatly inferior in crack resistance, breaking elongation, breaking stress, or the like, compared to a rubber composition into which a reclaimed rubber or a powdered rubber is not mixed, and hence improvement thereof has been desired. In the invention disclosed in Patent Literature 1, the upper limit of the content of reclaimed rubber per 100 parts by mass of the rubber component is 10 parts by mass, and a rubber composition into which more reclaimed rubber can be mixed is required. Further, the invention disclosed in Patent Literature 2 is not applicable to a tire tread, and is only applicable to an under rubber.

The present inventors have diligently studied and found that mixing a specific polyhydric alcohol suppresses deterioration in properties such as crack resistance, breaking elongation, and breaking stress caused by mixing the reclaimed rubber and the powdered rubber, thereby completing the present invention. Although the detailed mechanism is unknown, it is partially understood as follows.

That is, it is presumed, although the reason is unknown, that when a specific polyhydric alcohol is mixed into a rubber composition comprising a rubber component comprising 30% by mass or more of a natural rubber and a synthetic isoprene rubber in total and a reclaimed rubber and/or powdered rubber, the specific polyhydric alcohol interacts with these components to improve the crack resistance, breaking elongation, and breaking stress.

The present invention is described in detail hereinunder.

<Rubber Component (A)>

The rubber composition of the present invention comprises a rubber component (A), and the rubber component (A) comprises 30% by mass or more of a natural rubber and a synthetic isoprene rubber in total. The rubber component (A) is a rubber component excluding the reclaimed rubber and the powdered rubber.

From the viewpoint of further improving the crack resistance, breaking elongation and breaking stress of the crosslinked rubber composition, the total content of the natural rubber and the synthetic isoprene rubber in the rubber component (A) is 30% by mass or more, preferably 50% by mass or more, more preferably 70% by mass or more, still more preferably 80% by mass or more, even more preferably 90% by mass or more, and most preferably the rubber component consists of only the natural rubber and the synthetic isoprene rubber. That is, the total amount of the natural rubber and the synthetic isoprene rubber is particularly preferably 100% by mass of the rubber component.

The rubber component may comprise both the natural rubber and the synthetic isoprene rubber, may comprise only one of those, and is not particularly limited, but preferably comprises at least the natural rubber, and more preferably comprises only the natural rubber among the natural rubber and the synthetic isoprene rubber.

The rubber component (A) may comprise other synthetic rubbers other than the synthetic isoprene rubber, in addition to the natural rubber and synthetic isoprene rubber described above.

A preferred example of the other synthetic rubbers is, but not particularly limited to, a synthetic diene rubber. Examples of the synthetic diene rubber include a polybutadiene rubber (BR), a styrene-butadiene copolymer rubber (SBR), an ethylene-propylene-diene terpolymer rubber, a chloroprene rubber, a butyl rubber, a halogenated butyl rubber, and an acrylonitrile-butadiene rubber. These other synthetic rubbers may be used singly or in combinations of two or more.

Examples of the reclaimed materials include the reclaimed rubber and the powdered rubber. By mixing these reclaimed materials, the environmental load can be reduced. From the viewpoint of achieving both environmental load reduction and crack resistance, the proportion of reclaimed materials is preferably 1 to 25%, and more preferably 4 to 20%. Here, the proportion of the reclaimed material is given by mass of reclaimed material [phr]/total mass of rubber composition [phr].

<At Least One (B) Selected from the Group Consisting of Reclaimed Rubber and Powdered Rubber>

The rubber composition of the present invention comprises at least one (B) selected from the group consisting of a reclaimed rubber and a powdered rubber. The component B is not particularly limited, the reclaimed rubber may be used alone, the powdered rubber may be used alone, or the reclaimed rubber and the powdered rubber may be used in combination. Among these, it is preferable to comprise at least the reclaimed rubber as the component B, and it is more preferable to comprise only the reclaimed rubber.

Hereinafter, each of the reclaimed rubber and the powdered rubber will be described in detail.

[Reclaimed Rubber]

For the reclaimed rubber used for the present invention, a commercially-available reclaimed rubber can be used. The reclaimed rubber includes those obtained by reclaiming used rubbers of automobile tires, tubes and other rubber products as defined in JIS K 6313-2012, and those having the same properties as the former. However, powdery materials are excluded. The reclaimed rubber is devulcanized.

The kind of the reclaimed rubber may be any selected from the group consisting of a tube reclaimed rubber, a tire reclaimed rubber, and any other reclaimed rubber, and one or more kinds of these may be combined. Among these, a tire reclaimed rubber is preferred.

Methods of producing reclaimed rubber are not particularly limited, and known processes such as an oil pan process and a reclaimator process may be used.

The rubber component in the reclaimed rubber preferably has a natural rubber content rate of 40% by mass or more, more preferably 50% by mass or more, and still more preferably 70% by mass or more. When the natural rubber content rate is within the above range, excellent crack resistance, breaking elongation, and breaking stress can be obtained. The natural rubber content rate in reclaimed rubber refers to a value determined by the measurement of pyrolysis gas chromatography (PyGC).

[Powdered Rubber]

The powdered rubber may be referred to as "scum rubber" and is a vulcanized powdered rubber recycled from waste rubber products (reclaimed powdered rubber). The rubber species of the waste rubber to be the raw material for the powdered rubber is not particularly limited, and may comprise at least one selected from a natural rubber and a synthetic rubber. As the synthetic rubber, a diene rubber is preferred, and examples thereof include a polyisoprene rubber, a styrene-butadiene copolymer rubber, a high-cis-1,4-polybutadiene rubber, a low-cis-1,4-polybutadiene rubber, an ethylene-propylene-diene terpolymer, a chloroprene rubber, a butyl rubber, a halogenated butyl rubber, an acrylonitrile-butadiene rubber, etc.

Methods of producing powdered rubber for use in the present invention are not particularly limited, and for example, the powdered rubber may be produced as follows.

Specifically, one example is a finely-grinding rubber processing method having a finely-grinding step (A) of grinding a rubber raw material processed into chips by a finely-grinding means from a state of a roughly-ground rubber to a finely-ground rubber via a middle-ground rubber by a process of rough grinding, middle grinding and finish grinding while optionally adding a caking inhibitor; and a classification and recovery step (B) of classifying the finely-ground rubber and recovering at least a part thereof as a fine powdered rubber product.

Further, the method is described in detail. Preferably, the method comprises the following 3 steps.

Preliminary grinding step (Y): Rubber chips are processed into finely-ground rubber by a preliminary grinding machine of a preliminary grinding means. However, the preliminary grinding step is an optional step that may be incorporated in the above-mentioned method, as needed.

Finely-grinding step (A): The finely-ground rubber is stepwise ground to be finally finished into a finely-ground rubber, using a finely-grinding machine of a finely-grinding means, while optionally a caking inhibitor is added thereto.

Classification and recovery step (B): Using a classifying machine of a classification means, the finely-ground rubber is classified (screened) into a powdered rubber having a predetermined particle size (containing a fine-powdered rubber having a particle size smaller than the predetermined particle size) and any others to recover it as a product. In classification, a mesh sieve having a predetermined sieve opening as defined in ASTM D5603-01 (2008) may be used.

In the preliminary grinding step (Y), for example, waste tires (processed for removing tire reinforcing materials such as beat tire, steel belt, ply, etc.) are cut into pieces, the cut tire pieces are ground into a rubber chips (tire chips) having a predetermined size, and these are, as rubber raw materials, put into a preliminary grinding machine, and processed into a finely-ground rubber by the grinding section provided in the grinding chamber. The rubber chips to be supplied to the preliminary grinding machine may be any ones, but are preferably cut into a size of 1 mm to 8 mm or so, as useful for reducing the particle size of the finely-ground rubber. When the rubber chips are previously heated, the fine grinding operation in the preliminary grinding machine may be smooth; however, there is no problem in treatment at an ordinary temperature, and whether or not the preheating operation is added may be adequately selected.

By grinding the rubber chips a plurality of times repeatedly in a preliminary grinding machine, a finely-ground rubber having a small particle size can be produced.

The size of the rubber chips is not limited to the range of 1 mm to 8 mm. However, by controlling the size of the rubber chips to fall within the range, the grinding efficiency in the preliminary grinding step (Y) can be prevented from lowering not requiring any additional work for grinding prior to the preliminary grinding step (Y).

As the preliminary grinding machine, any suitable one may be selected, including an extruder for stirring and grinding rubber chips, a roll grinding machine of grinding them by rolls, etc.

In the finely-grinding step (A), the finely-ground rubber processed in the preliminary grinding machine is ground by a finely-grinding machine from a state of rough grinding to finish grinding via middle grinding into a finely-ground rubber. The fine grinding machine is preferably a roll grind means where a rough grinding part, a middle grinding part and a finish grinding part are continuously arranged from the upper stage (or the upper stream) toward the lower stage (or the lower stream). The finely-ground rubber processed in the finish grinding step is fed to the classifying machine in the classification and recovery step (B).

In the finely-grinding step, the optional caking inhibitor that may be added as needed is fed to the stirrer arranged at the top of the rough grinding part, the middle grinding part and the finish grinding part, and in the stirrer, the inhibitor is uniformly stirred with the ground rubber and is thus put into the rough grinding part, the middle grinding part and the finish grinding part.

As the caking inhibitor, a filler (calcium carbonate, alumina, zinc oxide, etc.) and a reinforcing material (carbon black, talc, silica, etc.) are suitable. The kind of the caking inhibitor may be appropriately selected in consideration of the production cost, the use of the finely-ground rubber, etc.

By adding the caking inhibitor, the surface of the ground rubber is coated with it, so that the ground rubber can be prevented from again caking and bonding together, and it is advantageous in that the classification (screening) by a classifying machine can be efficient and easy. With securing the advantage of this type, the amount of the caking inhibitor to be added is preferably small as it contributes toward cost down and is advantageous for reuse as a raw material for tires.

The grinding method for the raw material rubber is not limited to the above-mentioned methods, but a freezing and grinding method, a grindstone-type grinding method, a grinding method with an extruder or the like may also be employed. In the freezing and grinding method, preferably, rubber is, if desired, previously finely ground with a cutter mill or the like and then frozen using a liquid nitrogen or the like, and thereafter ground.

In the present invention, the particle size of the powdered rubber is preferably 80 mesh or more. Here, the 80-mesh powdered rubber is a powdered rubber having passed through an 80-mesh sieve defined in ASTM D563-01 (2008).

The particle size of the powdered rubber is more preferably 40 to 80 mesh, even more preferably 50 to 70 mesh.

In the present invention, the components B may be used singly or in combinations of two or more. In the rubber composition of the present invention, the content of the component B per 100 parts by mass of the rubber component (A) is preferably large in consideration of the environment, and more preferably 10 parts by mass or more in total.

From the viewpoint of obtaining a crosslinked rubber composition excellent in crack resistance, breaking elongation, and breaking stress, the content of the component B per 100 parts by mass of the rubber component is preferably 100 parts by mass or less, more preferably 50 parts by mass or less, still more preferably 30 parts by mass or less, and even more preferably 15 parts by mass or less.

<Polyhydric Alcohol (C)>

By comprising a polyhydric alcohol (C) comprising the polyhydric alcohol (C) having 3 or more hydroxyl groups per molecule (also simply referred to as "polyhydric alcohol (C)"), the crack resistance, breaking elongation, and breaking stress of the rubber composition of the present invention are improved.

The polyhydric alcohol (C) has 3 or more hydroxyl groups per molecule. The number of hydroxyl groups per molecule is preferably large, preferably 4 or more, and more preferably 5 or more, from the viewpoint of crack resistance, breaking elongation, and breaking stress. In order to obtain a melting point at which satisfactory kneadability of the rubber composition can be obtained, the number of hydroxyl groups per molecule is preferably 10 or less, and more preferably 8 or less.

The polyhydric alcohol (C) may be any of an aliphatic polyhydric alcohol, an alicyclic polyhydric alcohol, and an aromatic polyhydric alcohol, but is preferably an aliphatic polyhydric alcohol or an alicyclic polyhydric alcohol, and more preferably an aliphatic polyhydric alcohol, from the viewpoint of obtaining effects and the desired melting point. That is, the polyhydric alcohol is preferably a chain polyhydric alcohol.

It is preferable for the polyhydric alcohol not to have a cyclic structure such that a desired melting point can be obtained and a crosslinked rubber composition having better crack resistance can be obtained.

The aliphatic polyhydric alcohol is preferably a compound in which a linear or branched aliphatic hydrocarbon is substituted with 3 or more hydroxyl groups, and more preferably a linear polyhydric alcohol in which a linear aliphatic hydrocarbon is substituted with 3 or more hydroxyl groups. The aliphatic hydrocarbon may be either a saturated aliphatic hydrocarbon or an unsaturated aliphatic hydrocarbon, but is preferably a saturated aliphatic hydrocarbon.

It is preferable that the number of hydroxyl groups that the polyhydric alcohol (C) has per molecule be more than a half of the number of carbon atoms that the polyhydric alcohol (C) has per molecule. That is, when the number of hydroxyl groups which the polyhydric alcohol (C) has per molecule is set to $N_{OH}$ and the number of carbon atoms which the polyhydric alcohol (C) has per molecule is set to Nc, it is preferable that the following Formula (A) be satisfied:

$$N_{OH} > N_C/2 \qquad (A)$$

This is preferable because when the above Formula (A) is satisfied, a crosslinked rubber composition having better crack resistance, breaking elongation, and breaking stress can be obtained.

$N_{OH}/N_c$ is preferably more than 0.5, more preferably 0.65 or more, still more preferably 0.8 or more, and even more preferably 0.9 or more.

The melting point of the polyhydric alcohol (C) is preferably 170°C or less, more preferably 160°C or less, still more preferably 145°C or less, and even more preferably 130°C or less, from the viewpoint of homogeneously dispersing the polyhydric alcohol (C) in the rubber component during kneading.

The boiling point of the polyhydric alcohol (C) is preferably 160°C or more, more preferably 180°C or more, and still more preferably 200°C or more, from the viewpoint of suppressing the volatilization of the polyhydric alcohol (C) at the time of kneading and crosslinking of the rubber composition. The upper limit of the boiling point is not particularly limited, but is preferably 500°C or less, and more preferably 400°C or less.

Examples of the polyhydric alcohol (C) include sugar alcohols, and specific examples thereof include tetritols such as erythritol (boiling point = 329 to 331°C, melting point = 121°C) and threitol (boiling point = 330°C, melting point = 88 to 90°C), pentitols such as arabitol, xylitol (boiling point = 216°C, melting point = 92 to 96°C), and ribitol; hexitols such as sorbitol (boiling point = 296°C, melting point = 95°C), mannitol (boiling point = 290 to 295°C, melting point = 166 to 168°C), and galactitol; heptitols such as boremitol; octitols such as D-erythro-D-galactooctitol; nonitols; and decitols.

There is no limitation on the configuration of these sugar alcohols. The configuration of these sugar alcohols may be D-form or L-form, or may be DL-form which has D-form and L-form in any ratios.

Of them, preferred in the present invention are mannitol, galactitol, xylitol, and sorbitol, more preferred are xylitol and sorbitol, and still more preferred is sorbitol.

In the rubber composition of the present invention, the content of the polyhydric alcohol (C) is preferably 1 to 6 parts by mass per 100 parts by mass of the rubber component (A). This is preferable because when the content of the polyhydric alcohol (C) is within the above range, a crosslinked rubber composition having excellent crack resistance, breaking elongation and breaking stress can be obtained.

In the rubber composition, the content of the polyhydric alcohol (C) is more preferably 1.5 to 5.5 parts by mass, still more preferably 1.5 to 4.5 parts by mass, and even more preferably 1.5 to 4.0 parts by mass per 100 parts by mass of the rubber component (A).

<Other Components>

The rubber composition of the present invention may comprise other components in addition to the components described above. The other components are not particularly limited, and additives usually used in the rubber industry, for example, fillers such as carbon black, silica, and aluminum hydroxide, softeners, antioxidants, vulcanization accelerators, vulcanizing agents (e.g., sulfur), vulcanization accelerators, vulcanization acceleration aids (e.g., fatty acids such as zinc oxide and stearic acid), vulcanization retarders, silane coupling agents, resins, and oils may be appropriately selected and mixed within a range that does not impair the objects of the present invention.

<Preparation of Rubber Composition>

The rubber composition of the present invention may be produced by mixing and kneading the above components using a kneader such as a Banbury mixer, a roll, or an internal mixer.

At that stage, the mixing amounts of the component A, the component B, the component C, and others is the same as those in the rubber component described above.

The respective components may be kneaded in one step, or two or more divided steps. For example, there is a method of kneading components A to C and mixing components other than the vulcanizing agent and vulcanization accelerator in the first step, and kneading the vulcanizing agent and vulcanization accelerator in the second stage.

The maximum temperature of the first step of kneading is preferably from 130 to 170°C and the maximum temperature of the second step is preferably from 90 to 120°C.

[Crosslinked Rubber Composition]

A crosslinked rubber composition of the present invention is obtained by crosslinking the rubber composition of the present invention described above.

The crosslinking method for the rubber composition is not particularly limited, and a known crosslinking method may be applied. For example, the crosslinking may be performed by molding an unvulcanized rubber composition and then subjecting the same to crosslinking, or by performing a step of preliminary crosslinking to obtain a semi-crosslinked rubber from a non-crosslinked rubber composition, and molding the same and then subjecting the semi-vulcanized rubber to main vulcanization.

[Rubber Products and Tires]

The rubber composition and the crosslinked rubber composition of the present invention are used for various rubber products and are suitable as tread members of tires, and particularly suitable as tread members of pneumatic tires. Examples of the infill gas of the pneumatic tires include ordinary air or air having a controlled oxygen partial pressure, and inert gases such as nitrogen, argon, and helium.

In a case where the rubber composition or the crosslinked rubber composition of the present invention is used for a tire, the rubber composition is not limited to the tread member of tire and may be used for, base tread, side wall, side-reinforcing rubber, bead filler, etc.

In addition, for other uses other than tires, the rubber composition of the present invention is usable as vibration isolation rubber, seismic isolation rubber, belt (conveyor belt), rubber roller, various hoses, moran, etc.

Examples

The present invention will be described in more detail with reference to Examples given below, but the present invention is not whatsoever restricted by the following Examples.

[Mixing Components of Rubber Composition]

The components to be mixed in the rubber composition of Examples and Comparative Examples are mentioned below.

<Rubber Component (A)>

Natural rubber: TSR20
BR: BR 150L, manufactured by Ube Industries, Ltd.
SBR: T2000, manufactured by Asahi Kasei Chemicals Corporation

<At Least One (B) Selected from the Group Consisting of Reclaimed Rubber and Powdered Rubber>

Reclaimed rubber A: manufactured by Muraoka Rubber Reclaiming Co., Ltd., natural rubber: 73%
Powdered rubber: manufactured by US Lehigh Technologies, natural rubber: 67%

<Polyhydric Alcohol (C)>

Polyhydric alcohol A: Sorbitol (manufactured by Kanto Chemical Co., Ltd., number of hydroxyl groups: 6, number of hydroxyl groups/number of carbon atoms = 1)
Polyhydric alcohol B: Xylitol (manufactured by Wako Pure Chemical Industries, Ltd., number of hydroxyl groups 5, number of hydroxyl groups/number of carbon atoms = 1)
Alcohol a: 1-Nonanol (manufactured by Wako Pure Chemical Industries, Ltd., number of hydroxyl groups 1, number of hydroxyl groups/number of carbon atoms = 1/9)

<Others>

Carbon black: SAF (ASAHI #105, manufactured by Asahi Carbon Co., Ltd.)
Zinc oxide: manufactured by Hakusui Tech Co., Ltd.
Wax: Microcrystalline (Selected microcrystalline wax, manufactured by Seiko Chemical Co., Ltd.)
Resin: DCPD resin, manufactured by Nippon Synthetic Chemical Industry Co., Ltd.
Antioxidant 6C: N-Phenyl-N'-(1,3-dimethylbutyl)-p-phenylenediamine (NOCRAC 6C, manufactured by Ouchi Shinko Chemical Industry Co., Ltd.)
Vulcanization accelerator CZ: N-Cyclohexyl-2-benzothiazolyl sulfenamide (NOCCELER CZ-G, manufactured by Ouchi Shinko Chemical Industry Co., Ltd.)
Vulcanization accelerator DPG: Diphenylguanidine, (SOXINOL-D, manufactured by Sumitomo Chemical Co., Ltd.)
Vulcanization accelerator MBTS: Di-2-benzothiazolyl disulfide (Nocceler DM-P, manufactured by Ouchi Shinko Chemical Industry Co., Ltd.)
Vulcanization accelerator NS: N-Tert-butyl-2-benzothiazolyl sulfenamide (Nocceler NS-P, manufactured by Ouchi Shinko Chemical Industry Co., Ltd.)
Here, the reclaimed material ratio in the table was determined as "mass of reclaimed material [phr]/total mass of rubber composition [phr]".

[Evaluation]

Evaluation in the following Examples and Comparative Examples was carried out as follows.

(1) Crack Resistance

For each obtained rubber composition sample, after vulcanization treatment, a trouser tear strength was measured using a tensile tester (manufactured by Shimadzu Corporation) in accordance with JIS K 6252.
The results of Examples 1 to 7 and Comparative Examples 1 to 6 are shown in Table 1 as index ratios taking the tear strength of the sample of Comparative Example 1 as 100. This indicates that the larger the value, the better the crack resistance.

(2) Breaking Elongation (elongation at break, EB) and Breaking Stress (tensile strength at break, TB)

Measurement was performed in accordance with JIS K 6251:2010 at a tensile speed of 300 mm/min and high temperature (100°C).
In the evaluation, the results were shown as being indexed taking the breaking elongation and the breaking stress of Comparative Example 1 as 100. The larger the value, the higher the breaking elongation and the breaking stress.

(Examples 1 to 7 and Comparative Examples 1 to 6)

According to the mixing formulation shown in Table 1 and using a Banbury mixer, the above-mentioned mixing components for rubber composition were kneaded to prepare samples of rubber compositions. In the final stage of kneading, sulfur serving as the vulcanizing agent, and the vulcanization accelerator were added.
The obtained rubber composition was vulcanized at 145°C for 20 minutes to prepare the crosslinked (vulcanized) rubber, and using the crosslinked rubber composition, the crack resistance, breaking elongation, and breaking stress were evaluated by the method described above. The samples were evaluated based on the evaluation of Comparative Example 1 as 100.

Table 1

| | | Example | | | | | Comparative Example | | Example | Comparative Example | Example | Comparative Example | Comparative Example | Comparative Example |
|---|---|---|---|---|---|---|---|---|---|---|---|---|---|---|---|
| | | 1 | 2 | 3 | 4 | 5 | 1 | 2 | 6 | 3 | 7 | 4 | 5 | 6 |
| Rubber composition | Natural rubber | 100 | 100 | 100 | 100 | 100 | 100 | 100 | 100 | 100 | 100 | 100 | | 20 |
| | BR | | | | | | | | | | | | | 80 |
| | SBR | | | | | | | | | | | | 100 | |
| | Reclaimed rubber A | 15 | 15 | 15 | 15 | 15 | 15 | 15 | | | 30 | 30 | 15 | 15 |
| | Powdered rubber | | | | | | | | 15 | 15 | | | | |
| | Polyhydric alcohol A | 3 | | 1 | 5 | 8 | | | 3 | | 3 | | 3 | 3 |
| | Polyhydric alcohol B | | 3 | | | | | | | | | | | |
| | Alcohol a | | | | | | | 3 | | | | | | |
| | Carbon black | 40 | 40 | 40 | 40 | 40 | 40 | 40 | 40 | 40 | 40 | 40 | 40 | 40 |
| | Stearic acid | 2 | 2 | 2 | 2 | 2 | 2 | 2 | 2 | 2 | 2 | 2 | 2 | 2 |
| | Zinc oxide | 3.5 | 3.5 | 3.5 | 3.5 | 3.5 | 3.5 | 3.5 | 3.5 | 3.5 | 3.5 | 3.5 | 3.5 | 3.5 |
| | Wax | 1.5 | 1.5 | 1.5 | 1.5 | 1.5 | 1.5 | 1.5 | 1.5 | 1.5 | 1.5 | 1.5 | 1.5 | 1.5 |
| | Resin | 1.0 | 1.0 | 1.0 | 1.0 | 1.0 | 1.0 | 1.0 | 1.0 | 1.0 | 1.0 | 1.0 | 1.0 | 1.0 |
| | Antioxidant 6C | 2.0 | 2.0 | 2.0 | 2.0 | 2.0 | 2.0 | 2.0 | 2.0 | 2.0 | 2.0 | 2.0 | 2.0 | 2.0 |
| | Vulcanization Accelerator CZ | 1.0 | 1.0 | 1.0 | 1.0 | 1.0 | 1.0 | 1.0 | 1.0 | 1.0 | 1.0 | 1.0 | | 1.0 |
| | Vulcanization Accelerator DPG | | | | | | | | | | | | 0.5 | |
| | Vulcanization Accelerator MBTS | | | | | | | | | | | | 0.5 | |
| | Vulcanization Accelerator NS | | | | | | | | | | | | 0.5 | |
| | Sulfur | 1.5 | 1.5 | 1.5 | 1.5 | 1.5 | 1.5 | 1.5 | 1.5 | 1.5 | 1.5 | 1.5 | 1.5 | 1.5 |
| Total mass [phr] | | 170.5 | 170.5 | 168.5 | 172.5 | 175.5 | 167.5 | 170.5 | 170.5 | 167.5 | 185.5 | 182.5 | 171.0 | 170.5 |
| Reclaimed material ratio [%] | | 8.8 | 8.8 | 8.9 | 8.7 | 8.5 | 9.0 | 8.8 | 8.8 | 9.0 | 16.2 | 16.4 | 8.8 | 8.8 |
| Evaluation | EB | 101 | 101 | 101 | 101 | 105 | 100 | 102 | 93 | 92 | 98 | 96 | 56 | 58 |
| | TB | 100 | 100 | 103 | 103 | 103 | 100 | 104 | 82 | 82 | 98 | 98 | 53 | 43 |
| | Crack resistance | 103 | 103 | 106 | 102 | 100 | 100 | 98 | 88 | 86 | 105 | 99 | 62 | 79 |

As is apparent from Table 1, by comprising a specific polyhydric alcohol, a rubber composition from which a crosslinked rubber composition having excellent crack resistance and high breaking elongation and breaking stress can be obtained was obtained.

Industrial Applicability

According to the present invention, a rubber composition from which a crosslinked rubber composition having excellent crack resistance and high breaking elongation and breaking stress can be provided. Further, according to the present invention, it is expected to provide a rubber product such as a tire having excellent crack resistance, breaking elongation, and breaking stress.

**Claims**

1. A rubber composition comprising:

   a rubber component (A) comprising 30% by mass or more of a natural rubber and a synthetic isoprene rubber in total;
   at least one (B) selected from the group consisting of a reclaimed rubber and a powdered rubber; and
   a polyhydric alcohol (C) having 3 or more hydroxyl groups per molecule.

2. The rubber composition according to claim 1,
   wherein the polyhydric alcohol (C) is a linear polyhydric alcohol in which a linear aliphatic hydrocarbon is substituted with 3 or more hydroxyl groups.

3. The rubber composition according to claim 1 or 2,
   wherein the number of hydroxyl groups that the polyhydric alcohol (C) has per molecule is more than a half of the number of carbon atoms per molecule.

4. The rubber composition according to any one of claims 1 to 3,
   wherein a melting point of the polyhydric alcohol (C) is 170°C or less.

5. The rubber composition according to any one of claims 1 to 4,
   wherein a content of the polyhydric alcohol (C) is 1 to 6 parts by mass per 100 parts by mass of the rubber component (A).

6. The rubber composition according to any one of claims 1 to 5,
   wherein a content of the at least one (B) selected from the group consisting of a reclaimed rubber and a powdered rubber is 10 parts by mass or more per 100 parts by mass of the rubber component (A).

7. The rubber composition according to any one of claims 1 to 6,
   wherein a total content of the natural rubber and the synthetic isoprene rubber in the rubber component (A) is 50% by mass or more.

8. A rubber product using the rubber composition of any one of claims 1 to 7.

9. A tire using the rubber composition of any one of claims 1 to 7.

## INTERNATIONAL SEARCH REPORT

| International application No. |
|---|
| PCT/JP2018/020394 |

**A. CLASSIFICATION OF SUBJECT MATTER**
Int.Cl. C08L7/00(2006.01)i, C08K5/053(2006.01)i, C08L9/00(2006.01)i,
C08L17/00(2006.01)i, B60C1/00(2006.01)n

According to International Patent Classification (IPC) or to both national classification and IPC

**B. FIELDS SEARCHED**

Minimum documentation searched (classification system followed by classification symbols)
Int.Cl. C08L7/00, C08K5/053, C08L9/00, C08L17/00, B60C1/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2016-108421 A (BRIDGESTONE CORPORATION) 20 June 2016, claims, paragraph [0026], examples 1-3, comparative example 4, etc. (Family: none) | 1-4, 6-9<br>5 |
| X<br>A | JP 11-310009 A (THE YOKOHAMA RUBBER CO., LTD.) 09 November 1999, claims, table 4, etc. (Family: none) | 1-2, 4-9<br>3 |
| Y | JP 2013-213129 A (THE YOKOHAMA RUBBER CO., LTD.) 17 October 2013, claims, examples 1-4, etc. (Family: none) | 1-9 |

☒ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 August 2018 (17.08.2018) | 28 August 2018 (28.08.2018) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

## INTERNATIONAL SEARCH REPORT

| | International application No. |
|---|---|
| | PCT/JP2018/020394 |

C (Continuation).    DOCUMENTS CONSIDERED TO BE RELEVANT

| Category* | Citation of document, with indication, where appropriate, of the relevant passages | Relevant to claim No. |
|---|---|---|
| Y | CN 104231345 A (ZHU, Qigui) 24 December 2014, claims, example 1, etc. (Family: none) | 1-9 |
| Y | JP 2-202934 A (BRIDGESTONE CORPORATION) 13 August 1990, claims, examples 1-5, 7-8, etc. (Family: none) | 1-9 |
| Y | JP 7-118457 A (SUMITOMO CHEMICAL INDUSTRY COMPANY LIMITED) 09 May 1995, claims, examples 1-5, etc. (Family: none) | 1-9 |
| Y | JP 56-10534 A (JAPAN SYNTHETIC RUBBER CO., LTD.) 03 February 1981, claims (Family: none) | 1-9 |
| Y | JP 2008-266381 A (SUMITOMO RUBBER INDUSTRIES, LTD.) 06 November 2008, claims (Family: none) | 1-9 |
| Y | JP 2007-217558 A (BRIDGESTONE CORPORATION) 30 August 2007, claims (Family: none) | 1-9 |
| A | JP 2013-213125 A (THE YOKOHAMA RUBBER CO., LTD.) 17 October 2013 (Family: none) | 1-9 |
| A | JP 2015-218251 A (THE YOKOHAMA RUBBER CO., LTD.) 07 December 2015 (Family: none) | 1-9 |
| A | WO 2017/061441 A1 (BRIDGESTONE CORPORATION) 13 April 2017 (Family: none) | 1-9 |
| A | WO 2017/061442 A1 (BRIDGESTONE CORPORATION) 13 April 2017 (Family: none) | 1-9 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009298910 A

- JP 2010065137 A